(19) Europäisches Patentamt / European Patent Office / Office européen des brevets

(11) **EP 4 517 001 A2**

(12) **EUROPEAN PATENT APPLICATION**

(43) Date of publication:
**05.03.2025 Bulletin 2025/10**

(21) Application number: **25152525.9**

(22) Date of filing: **06.07.2022**

(51) International Patent Classification (IPC):
***D21H 27/00*** *(2006.01)*

(52) Cooperative Patent Classification (CPC):
(C-Sets available)
**C08L 33/066; C08F 120/56; C08F 220/1802; D21H 17/37; D21H 17/72; D21H 21/16; D21H 27/10**
(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2021 JP 2021113736**

(62) Document number(s) of the earlier application(s) in accordance with Art. 76 EPC:
**22837719.8 / 4 345 138**

(71) Applicant: **DAIKIN INDUSTRIES, LTD.**
**Osaka-shi, Osaka 530-0001 (JP)**

(72) Inventors:
- **Shibata, Shun**
  **Osaka, 530-8323 (JP)**
- **Uehara, Tetsuya**
  **Osaka, 530-8323 (JP)**
- **Noguchi, Daisuke**
  **Osaka, 530-8323 (JP)**
- **Nakamura, Hisako**
  **Osaka, 530-8323 (JP)**

(74) Representative: **Hoffmann Eitle**
**Patent- und Rechtsanwälte PartmbB**
**Arabellastraße 30**
**81925 München (DE)**

Remarks:
This application was filed on 17.01.2025 as a divisional application to the application mentioned under INID code 62.

(54) **OIL-RESISTANT AGENT COMPOSITION**

(57) The present invention provides an oil-resistant agent composition which contains (1) a hydrocarbon group-containing polymer and (2) an amphoteric polyacrylamide polymer, and which is capable of imparting paper with excellent oil resistance. It is preferable that the hydrocarbon group-containing polymer has (a) a repeating unit that is formed from an acrylic monomer which has a long-chain hydrocarbon group having 7 to 40 carbon atoms and (b) a repeating unit that is formed from an acrylic monomer which has a hydrophilic group. It is also preferable that this oil-resistant agent composition additionally contains an anionic polyacrylamide polymer.

EP 4 517 001 A2

(52) Cooperative Patent Classification (CPC): (Cont.)

C-Sets
**C08F 220/1802, C08F 220/20, C08F 220/34;**
**C08L 33/066, C08L 33/26**

## Description

Technical Field

The present disclosure relates to an oil-resistant agent composition and a paper treated with the oil-resistant agent composition.

Background Art

Paper may be required to have oil resistance.
For example, food packaging and food containers that are made of paper are required to prevent water and oil contained in food from oozing out. Accordingly, an oil-resistant agent is internally or externally applied to the paper.
Several proposals have been made to impart oil resistance to paper.
Patent Literature 1 (JP2009-102771A) discloses adding an oil-resistant treatment agent containing a composition (I) containing a cationic fluorine-containing copolymer (A) having a polymerization unit (a') based on a monomer (a) having a perfluoroalkyl group having 1 to 6 carbon atoms and a composition (II) containing an amphoteric polyacrylamide resin (B) to a constituent material of paper when producing oil-resistant paper.
Patent Literature 2 (International Publication No. WO2020/054856) discloses a paper oil-resistant agent containing a non-fluorine polymer having (a) a repeating unit formed from an acrylic monomer having a long-chain hydrocarbon group having 7 to 40 carbon atoms, and (b) a repeating unit formed from an acrylic monomer having a hydrophilic group.
Patent Literature 3 (International Publication No. WO 2020/241709) discloses a paper oil-resistant agent that is added to the inside of paper, containing (1) a non-fluorine polymer, and (2) at least one particle selected from inorganic particles or organic particles, in which an amount of the particle (2) is 1 to 99.9% by weight based on the total weight of the non-fluorine polymer (1) and the particle (2).

Citation List

Patent Literature

Patent Literature 1
JP 2009-102771A
Patent Literature 2
International Publication No. WO2020/054856
Patent Literature 3
International Publication No. WO2020/241709

Summary of Invention

Technical Problem

An object of the present disclosure is to provide an oil-resistant agent (oil-resistant agent composition) capable of imparting excellent oil resistance to paper.

Solution to Problem

The present disclosure relates to an oil-resistant agent composition containing a hydrocarbon group-containing polymer and an amphoteric polyacrylamide polymer. In the treatment of the paper, the oil-resistant agent composition may be externally or internally added, and it is preferable that the oil-resistant agent composition is internally added.
Preferable embodiments of the present disclosure are as follows:

[Embodiment 1]
An oil-resistant agent composition comprising (1) a hydrocarbon group-containing polymer and (2) an amphoteric polyacrylamide polymer.
[Embodiment 2]
The oil-resistant agent composition according to embodiment 1, wherein the hydrocarbon group-containing polymer

is a polymer having:

(a) a repeating unit formed from an acrylic monomer having a long-chain hydrocarbon group having 7 to 40 carbon atoms, and
(b) a repeating unit formed from an acrylic monomer having a hydrophilic group.

[Embodiment 3]
The oil-resistant agent composition according to embodiment 1 or 2, further comprising (3) an anionic polyacrylamide polymer.
[Embodiment 4]
The oil-resistant agent composition according to any one of embodiments 1 to 3, which is added to a pulp (slurry) .
[Embodiment 5]
The oil-resistant agent composition according to embodiment 4, wherein an amount of the hydrocarbon group-containing polymer is 0.03 to 3.0% by weight based on the pulp (solid weight), and an amount of the amphoteric polyacrylamide polymer is more than 0.3% by weight to 3.0% by weight based on the pulp (solid weight).
[Embodiment 6]
An oil-resistant agent kit comprising:

a liquid containing (1) a hydrocarbon group-containing polymer, and
a liquid containing (2) an amphoteric polyacrylamide polymer.

[Embodiment 7]
A method for producing oil-resistant paper, comprising adding (1) a hydrocarbon group-containing polymer and (2) an amphoteric polyacrylamide polymer to a paper constituent material or a pulp (slurry).
[Embodiment 8]
The method for producing oil-resistant paper according to embodiment 7, further comprising adding (3) an anionic polyacrylamide polymer.
[Embodiment 9]
The method for producing oil-resistant paper according to embodiment 7 or 8, wherein to the pulp (slurry),

(1) the hydrocarbon group-containing polymer and (2) the amphoteric polyacrylamide polymer are added in this order, or
(1) the hydrocarbon group-containing polymer, (2) the amphoteric polyacrylamide polymer, and (3) the anionic polyacrylamide polymer are added in this order.

[Embodiment 10]
The production method according to any one of embodiments 7 to 9, wherein a pulp slurry has an electrical conductivity of 0.1 to 2,000 $\mu$S/cm and a pH of 4 to 9, and hardness of water used in the pulp slurry is 5,000 ppm or less.
[Embodiment 11]
Oil-resistant paper obtained by the production method according to any one of embodiments 7 to 10.
[Embodiment 12]
Oil-resistant paper comprising (1) a hydrocarbon group-containing polymer and (2) an amphoteric polyacrylamide polymer inside the paper.
[Embodiment 13]
The oil-resistant paper according to embodiment 12, comprising (1) the hydrocarbon group-containing polymer and (2) the amphoteric polyacrylamide polymer in the oil-resistant agent kit according to embodiment 6 inside the paper.
[Embodiment 14]
The oil-resistant paper according to embodiment 12 or 13, which is a molded pulp product.
[Embodiment 15]
The oil-resistant paper according to any one of embodiments 12 to 14, which is a food packaging material or a food container.

Advantageous Effects of Invention

The present disclosure imparts high oil resistance to paper, and in particular excellent high-temperature oil resistance.

Adding an amphoteric polyacrylamide polymer to the pulp (slurry) makes it possible to reduce the amount of the

hydrocarbon group-containing polymer (non-fluorine oil-resistant agent) used.

Description of Embodiment

In the present disclosure, the hydrocarbon group-containing polymer is a non-fluorine polymer and functions as an oil-resistant agent.

In one embodiment, a hydrocarbon group-containing polymer and an amphoteric polyacrylamide polymer are used.

In another embodiment, a hydrocarbon group-containing polymer, an amphoteric polyacrylamide polymer, and an anionic acrylamide polymer are used.

The weight ratio of the hydrocarbon group-containing polymer to the amphoteric polyacrylamide polymer may be 10:90 to 90:10, 20:80 to 80:20, 30:70 to 70:30, or 40:60 to 60:40.

The lower limit of the amount of the hydrocarbon group-containing polymer may be more than 0.6% by weight, 0.65% by weight, 0.7% by weight, 0.75% by weight, 0.8% by weight, 0.85% by weight, 0.9% by weight, or 1% by weight based on the pulp (solid weight). Alternatively, the lower limit of the amount of the hydrocarbon group-containing polymer may be 0.05% by weight, 0.1% by weight, 0.15% by weight, 0.2% by weight, 0.25% by weight, or 0.3% by weight based on the pulp (solid weight).

The upper limit of the amount of the hydrocarbon group-containing polymer may be 4% by weight, 3.5% by weight, 3% by weight, 3.5% by weight, 3% by weight, 2.5% by weight, or 2% by weight based on the pulp (solid weight) . Alternatively, the upper limit of the amount of the hydrocarbon group-containing polymer may be less than 0.5% by weight, 0.45% by weight, 0.4% by weight, 0.35% by weight, 0.3% by weight, or 0.25% by weight based on the pulp (solid weight) .

For example, the amount of the hydrocarbon group-containing polymer may be 0.03 to 3.0& by weight or 0.05 to 2.5% by weight based on the pulp (solid weight). The amount of the hydrocarbon group-containing polymer may be more than 0.6% by weight to 3.0% by weight, 0.7 to 2.5% by weight, or 0.8 to 2.0% by weight based on the pulp (solid weight). Alternatively, the amount thereof may be 0.03 to less than 0.5% by weight, 0.05 to less than 0.5% by weight, 0.10 to 0.45% by weight, or 0.15 to 0.4% by weight, such as 0.2 to 0.4% by weight.

The amount of the amphoteric polyacrylamide polymer may be more than 0.3% by weight to 3.0% by weight, 0.4 to less than 3.0% by weight, or 0.5 to 2.5% by weight, such as 0.8 to 2.0% by weight or 1 to 2% by weight, based on the pulp (solid weight).

The amount of the anionic acrylamide polymer may be 0.01 to 3.0% by weight, 0.05 to 2.5% by weight, 0.1 to 2% by weight, 0.2 to 1.5% by weight, or 0.3 to 1% by weight based on the pulp (solid weight).

(1) Hydrocarbon group-containing polymer

The hydrocarbon group-containing polymer may be an acrylic polymer, polyester polymer, polyether polymer, silicone polymer, or urethane polymer having a hydrocarbon group, or the like. A polymer having an ester bond, an amide bond, and/or a urethane bond is preferable. In particular, an acrylic polymer (i.e., a hydrocarbon group-containing acrylic polymer) is preferable. The acrylic polymer preferably has an ester bond and/or an amide bond.

The hydrocarbon group-containing polymer may be a homopolymer or a copolymer. The hydrocarbon group-containing polymer is preferably a copolymer.

A homopolymer has only a repeating unit formed from one monomer. The homopolymer is preferably formed only from an acrylic monomer having a long-chain hydrocarbon group having 7 to 40 carbon atoms.

A copolymer has a repeating unit formed from two or more monomers.

The hydrocarbon group-containing polymer preferably has:

(a) a repeating unit formed from an acrylic monomer having a long-chain hydrocarbon group having 7 to 40 carbon atoms, and
(b) a repeating unit formed from an acrylic monomer having a hydrophilic group.

Moreover, the hydrocarbon group-containing polymer preferably has a repeating unit formed of (c) a monomer having an ion donating group in addition to the monomers (a) and (b).

The hydrocarbon group-containing polymer may have a repeating unit formed from (d) another monomer in addition to the monomers (a), (b), and (c).

<u>(a) Acrylic monomer having long-chain hydrocarbon group</u>

The acrylic monomer having a long-chain hydrocarbon group (a) has a long-chain hydrocarbon group having 7 to 40 carbon atoms. The long-chain hydrocarbon group having 7 to 40 carbon atoms is preferably a linear or branched

hydrocarbon group having 7 to 40 carbon atoms. The number of carbon atoms of the long-chain hydrocarbon group is preferably 10 to 40, such as 12 to 30, and in particular 15 to 30. Alternatively, the number of carbon atoms of the long-chain hydrocarbon group may be 18 to 40 carbon atoms.

The acrylic monomer having a long-chain hydrocarbon group (a) is preferably a monomer represented by formula:

$$CH_2=C(-X^1)-C(=O)-Y^1(R^1)_k$$

wherein

- $R^1$ is each independently a hydrocarbon group having 7 to 40 carbon atoms,
- $X^1$ is a hydrogen atom, a monovalent organic group, or a halogen atom,
- $Y^1$ is a divalent to tetravalent group composed of at least one selected from a hydrocarbon group having one carbon atom (in particular, $-CH_2-$, -CH=) , $-C_6H_4-$, -O-, - C(=O)-, $-S(=O)_2-$, or -NH-, provided that a hydrocarbon group is excluded, and
- k is 1 to 3.

$X^1$ may be a hydrogen atom, a methyl group, halogen excluding a fluorine atom, a substituted or unsubstituted benzyl group, or a substituted or unsubstituted phenyl group. Examples of $X^1$ include a hydrogen atom, a methyl group, a chlorine atom, a bromine atom, an iodine atom, and a cyano group. $X^1$ is preferably a hydrogen atom, a methyl group, or a chlorine atom. $X^1$ is particularly preferably a hydrogen atom.

$Y^1$ is a divalent to tetravalent group. $Y^1$ is preferably a divalent group.

$Y^1$ is preferably a group composed of at least one selected from a hydrocarbon group having one carbon atom, $-C_6H_4-$, -O-, -C(=O)-, $-S(=O)_2-$, or -NH-, provided that a hydrocarbon group is excluded. Examples of the hydrocarbon group having one carbon atom include $-CH_2-$, - CH= having a branched structure, and -C= having a branched structure.

$Y^1$ may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-
wherein

- Y' is a direct bond, -O-, -NH-, or $-S(=O)_2-$, and
- R' is $-(CH_2)_m-$ wherein m is an integer of 1 to 5, or $-C_6H_4-$ (a phenylene group).

Specific examples of $Y^1$ include -O-, -NH-, -O-C(=O)-, -C(=O)-NH-, -NH-C(=O)-, -O-C(=O)-NH-, -NH-C(=O)-O-, -NH-C(=O)-NH-, $-O-C_6H_4-$, $-O-(CH_2)_m-O-$ $-NH-(CH_2)_m-NH-$ , $-O-(CH_2)_m-NH-$, $-NH-(CH_2)_m-O-$, $-O-(CH_2)_m-O-C(=O)-$, $-O-(CH_2)_m-C(=O)-O-$, $-NH-(CH_2)_m-O-C(=O)-$, $-NH-(CH_2)_m-C(=O)-O-$, $-O-(CH_2)_m-O-C(=O)-NH-$, -O-(CH2)m-NH-C(=O)-O- $-O-(CH_2)_m-C(=0)-NH-$, -O-(CH2)m-NH-C(=O)- $-O-(CH_2)_m-NH-C(=O)-NH-$, $-O-(CH_2)_m-O-C_6H_4-$, $-O-(CH_2)_m-NH-S(=O)_2-$, $-O-(CH_2)_m-S(=O)_2-NH-$, $-NH-(CH_2)_m-O-C(=O)-NH-$, $-NH-(CH_2)_m-NH-C(=O)-O-$, $-NH-(CH_2)_m-C(=O)-NH-$, $-NH-(CH_2)_m-NH-C(=O)-$, $-NH-(CH_2)_m-NH-C(=O)-NH-$, $-NH-(CH_2)_m-O-C_6H_4-$, $-NH-(CH_2)_m-NH-C_6H_4-$, $-NH-(CH_2)_m-NH-S(=O)_2-$, or $-NH-(CH_2)_m-S(=O)_2-NH-$, wherein m is 1 to 5, and in particular 2 or 4.

$Y^1$ is preferably -O-, -NH-, $-O-(CH2)_m-O-C(=O)-$, $-O-(CH_2)_m-NH-C(=O)-$, $-O-(CH_2)_m-O-C(=O)-NH-$, $-O-(CH_2)_m-NH-C(=O)-O-$, $-O-(CH_2)_m-NH-C(=O)-NH-$, $-O-(CH_2)_m-NH-S(=O)_2-$, $-O-(CH_2)_m-S(=O)_2-NH-$, $-NH-(CH_2)_m-NH-S(=O)_2-$, or $-NH-(CH_2)_m-S(=O)_2-NH-$ wherein m is an integer of 1 to 5, and in particular 2 or 4. $Y^1$ is more preferably -O- or $-O-(CH_2)_m-NH-C(=O)-$, and in particular $-O-(CH_2)_m-NH-C(=O)$

$R^1$ is preferably a linear or branched hydrocarbon group. The hydrocarbon group may be in particular a linear hydrocarbon group. The hydrocarbon group is preferably an aliphatic hydrocarbon group, in particular a saturated aliphatic hydrocarbon group, and especially an alkyl group. The number of carbon atoms of the hydrocarbon group is preferably 12 to 30, such as 16 to 26 or 15 to 26, and in particular 18 to 22 or 17 to 22.

Examples of the acrylic monomer having a long-chain hydrocarbon group (a) include:

(a1) an acrylic monomer represented by formula:

$$CH_2=C(-X^4)-C(=O)-Y^2-R^2$$

wherein

- $R^2$ is a hydrocarbon group having 7 to 40 carbon atoms,
- $X^4$ is a hydrogen atom, a monovalent organic group, or a halogen atom, and
- $Y^2$ is -O- or -NH-, and

(a2) an acrylic monomer represented by formula:

$$CH_2=C(-X^5)-C(=O)-Y^3-Z(-Y^4-R^3)_n$$

wherein

$R^3$ is each independently a hydrocarbon group having 7 to 40 carbon atoms,
$X^5$ is a hydrogen atom, a monovalent organic group, or a halogen atom,
$Y^3$ is -O- or -NH-,
$Y^4$ is each independently a group composed of at least one selected from a direct bond, -O-, -C(=O) -, $-S(=O)_2-$, or -NH-,
Z is a divalent or trivalent hydrocarbon group having 1 to 5 carbon atoms, and
n is 1 or 2.

(a1) Acrylic monomer

The acrylic monomer (a1) is a compound represented by formula:

$$CH_2=C(-X^4)-C(=O)-Y^2-R^2$$

wherein

$R^2$ is a hydrocarbon group having 7 to 40 carbon atoms,
$X^4$ is a hydrogen atom, a monovalent organic group, or a halogen atom, and
$Y^2$ is -O- or -NH-.

The acrylic monomer (a1) is a long-chain acrylate ester monomer wherein $Y^2$ is -O- or a long-chain acrylamide monomer wherein $Y^2$ is -NH-.

$R^2$ is preferably an aliphatic hydrocarbon group, in particular a saturated aliphatic hydrocarbon group, and especially an alkyl group. In $R^2$, the number of carbon atoms of the hydrocarbon group is preferably 12 to 30, such as 16 to 26, and in particular 18 to 22.

$X^4$ may be a hydrogen atom, a methyl group, halogen excluding a fluorine atom, a substituted or unsubstituted benzyl group, or a substituted or unsubstituted phenyl group, and is preferably a hydrogen atom, a methyl group, or a chlorine atom.

Preferable specific examples of the long-chain acrylate ester monomer include lauryl (meth)acrylate, stearyl (meth)acrylate, icosyl (meth)acrylate, behenyl (meth)acrylate, stearyl $\alpha$-chloroacrylate, icosyl $\alpha$-chloroacrylate, and behenyl $\alpha$-chloroacrylate.

Preferable specific examples of the long-chain acrylamide monomer include stearyl (meth)acrylamide, icosyl (meth)acrylamide, and behenyl (meth)acrylamide.

(a2) Acrylic monomer

The acrylic monomer (a2) is a monomer different from the acrylic monomer (a1). The acrylic monomer (a2) is (meth)acrylate or (meth)acrylamide having a group composed of at least one selected from -O-, -C(=O)-, $-S(=O)_2-$, or -NH-.

The acrylic monomer (a2) may be a compound represented by formula:

$$CH_2=C(-X^5)-C(=O)-Y^3-Z(-Y^4-R^3)_n$$

wherein

$R^3$ is each independently a hydrocarbon group having 7 to 40 carbon atoms,
$X^5$ is a hydrogen atom, a monovalent organic group, or a halogen atom,
$Y^3$ is -O- or -NH-,
$Y^4$ is each independently a group composed of at least one selected from a direct bond, -O-, -C(=O)-, $-S(=O)_2-$, or -NH-,
Z is a direct bond or a divalent or trivalent hydrocarbon group having 1 to 5 carbon atoms, and
n is 1 or 2.

$R^3$ is preferably an aliphatic hydrocarbon group, in particular a saturated aliphatic hydrocarbon group, and especially an alkyl group. In $R^3$, the number of carbon atoms of the hydrocarbon group is preferably 12 to 30, such as 16 to 26 or 15 to 26, and in particular 18 to 22 or 17 to 22.

$X^5$ may be a hydrogen atom, a methyl group, halogen excluding a fluorine atom, a substituted or unsubstituted benzyl group, or a substituted or unsubstituted phenyl group, and is preferably a hydrogen atom, a methyl group, or a chlorine atom.

$Y^4$ may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'- wherein

Y' is each independently a direct bond, -O-, -NH-, or $-S(=O)_2-$, and
R' is $-(CH_2)_m-$ wherein m is an integer of 1 to 5, a linear hydrocarbon group having 1 to 5 carbon atoms and an unsaturated bond, a hydrocarbon group having 1 to 5 carbon atoms and a branched structure, or - $(CH_2)_1-C_6H_4-(CH_2)_l$-wherein l is each independently an integer of 0 to 5, and $-C_6H_4-$ is a phenylene group.

Specific examples of $Y^4$ include a direct bond, -O-, - NH-, -O-C(=O)-, -C(=O)-O-, -C(=O)-NH-, -NH-C(=O)-, $-NH-S(=O)_2-$, $-S(=O)_2-NH-$, -O-C(=O)-NH-, -NH-C(=O)-O-, -NH-C(=O)-NH-, $-O-C_6H_4-$, $-NH-C_6H_4-$, $-O-(CH_2)_m-O-$, $-NH-(CH_2)_m-NH-$, -O-(CH2)m-NH-, $-NH-(CH_2)_m-O-$, $-O-(CH_2)_m-O-C(=O)-$, $-O-(CH_2)_m-C(=O)-O-$, $-NH-(CH_2)_m-O-C(=O)-$, $-NH-(CH_2)_m-C(=O)-O-$, $-O-(CH_2)_m-O-C(=O)-NH-$, -O-(CH2)m-NH-C(=O)-O-, $-O-(CH_2)_m-C(=O)-NH-$, $-O-(CH2)_m-NH-C(=O)-$, $-O-(CH_2)_m-NH-C(=O)-NH-$, $-O-(CH_2)_m-O-C_6H_4-$, $-NH-(CH_2)_m-O-C(=O)-NH-$, $-NH-(CH_2)_m-NH-C(=O)-O-$, $-NH-(CH_2)_m-C(=O)-NH-$, $-NH-(CH_2)_m-NH-C(=O)-$, $-NH-(CH_2)_m-NH-C(=O)-NH-$, $-NH-(CH_2)_m-O-C_6H_4-$, $-NH-(CH_2)_m-NH-C_6H_4-$wherein m is an integer of 1 to 5.

$Y^4$ is preferably -O-, -NH-, -O-C(=O)-, -C(=O)-O-, - C(=O)-NH-, -NH-C(=O)-, $-NH-S(=O)_2-$, $-S(=O)_2-NH-$, -O-C(=O)-NH-, -NH-C(=O)-O-, -NH-C(=O)-NH-, or $-O-C_6H_4-$. $Y^4$ is more preferably -NH-C(=O)-, -C(=O)-NH-, -O-C(=O)-NH-, -NH-C(=O)-O-, or -NH-C(=O)-NH-.

Z is a direct bond or a divalent or trivalent hydrocarbon group having 1 to 5 carbon atoms, and may have a linear structure or a branched structure. The number of carbon atoms of Z is preferably 2 to 4, and in particular 2. Specific examples of Z include a direct bond, $-CH_2-$, - $CH_2CH_2-$, $-CH_2CH_2CH_2-$, $-CH_2CH_2CH_2CH_2-$, $-CH_2CH_2CH_2CH_2CH_2-$, - $CH_2CH=$ having a branched structure, $-CH_2(CH-)CH_2-$ having a branched structure, $-CH_2CH_2CH=$ having a branched structure, $-CH_2CH_2CH_2CH_2CH=$ having a branched structure, - $CH_2CH_2$ (CH-) $CH_2-$ having a branched structure, and - $CH_2CH_2CH_2CH=$ having a branched structure.

Z is preferably not a direct bond, and $Y^4$ and Z are simultaneously not direct bonds.

The acrylic monomer (a2) is preferably $CH_2=C(-X^5)-C$ (=O) -O- $(CH_2)$ $_m$-NH-C(=O)-$R^3$, $CH_2=C$ (-$X^5$) -C (=O) -O-$(CH_2)$ $_m$-O-C(=O)-NH-$R^3$, $CH_2=C$ (-$X^5$) -C(=O) -O-$(CH_2)$ $_m$-NH-C(=O) -O-R3, or $CH_2=C$ (-$X^5$) -C(=O) -O-$(CH_2)$ $_m$-NH-C(=O) -NH-$R^3$, wherein $R^3$ and $X^5$ are as defined above.

The acrylic monomer (a2) is particularly preferably $CH_2=C$ (-$X^5$) -C(=O) -O-$(CH_2)$ $_m$-NH-C(=O) -$R^3$.

The acrylic monomer (a2) can be produced by reacting hydroxyalkyl (meth)acrylate or hydroxyalkyl (meth) acrylamide with long-chain alkyl isocyanate. Examples of the long-chain alkyl isocyanate include lauryl isocyanate, myristyl isocyanate, cetyl isocyanate, stearyl isocyanate, oleyl isocyanate, and behenyl isocyanate.

Alternatively, the acrylic monomer (a2) can also be produced by reacting (meth)acrylate having an isocyanate group in a side chain, such as 2-methacryloyloxyethyl methacrylate, with long-chain alkylamine or long-chain alkyl alcohol. Examples of the long-chain alkylamine include laurylamine, myristylamine, cetylamine, stearylamine, oleylamine, and behenylamine. Examples of the long-chain alkyl alcohol include lauryl alcohol, myristyl alcohol, cetyl alcohol, stearyl alcohol, oleyl alcohol, and behenyl alcohol.

Preferable examples of the long-chain hydrocarbon group-containing acrylic monomer are as follows:

stearyl (meth)acrylate, behenyl (meth)acrylate, stearyl $\alpha$-chloroacrylate, behenyl $\alpha$-chloroacrylate;
stearyl (meth)acrylamide, behenyl (meth)acrylamide;

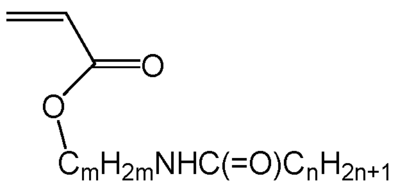

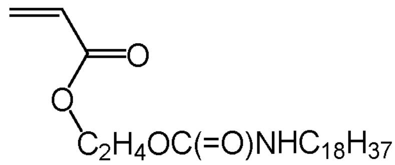

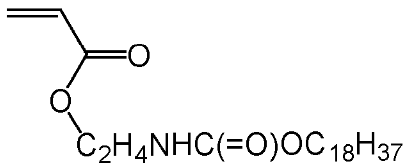

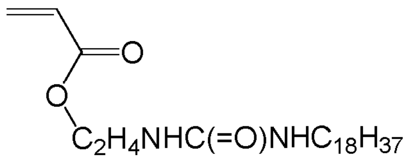

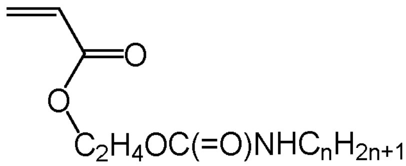

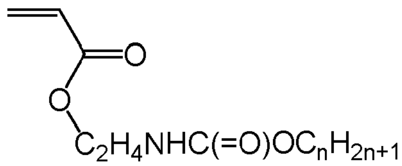

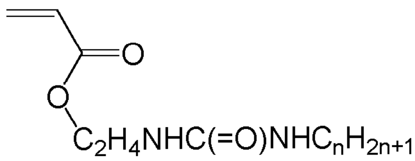

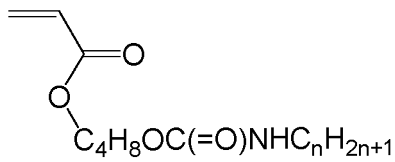

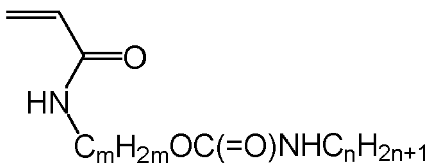

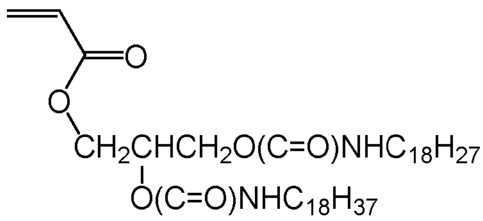

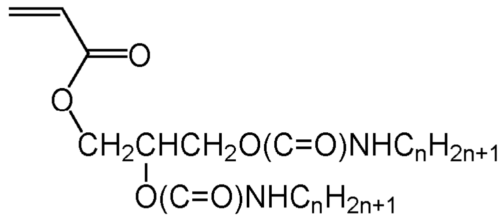

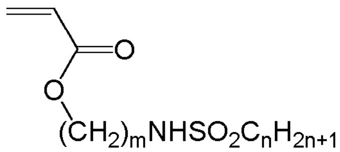

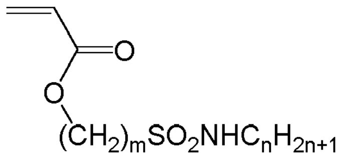

wherein n is a number of 7 to 40, and m is a number of 1 to 5.

The compounds of the above chemical formulae are acrylic compounds in which the α-position is a hydrogen atom, and specific examples may be methacrylic compounds in which the α-position is a methyl group and α-chloroacrylic compounds in which the α-position is a chlorine atom.

The melting point of the acrylic monomer having a long-chain hydrocarbon group (a) is preferably 10°C or higher, and more preferably 25°C or higher.

The acrylic monomer having a long-chain hydrocarbon group (a) is preferably an acrylate in which $X^1$, $X^4$, and $X^5$ are hydrogen atoms.

The acrylic monomer (a2) is preferably an amide group-containing monomer represented by formula:

$$R^{12}\text{-C (=O) -NH-}R^{13}\text{-O-}R^{21}$$

wherein

$R^{11}$ is an organic residue having an ethylenically unsaturated polymerizable group,
$R^{12}$ is a hydrocarbon group having 7 to 40 carbon atoms, and
$R^{13}$ is a hydrocarbon group having 1 to 5 carbon atoms.

$R^{11}$ is an organic residue having an ethylenically unsaturated polymerizable group, and is not limited as long as there is a carbon-carbon double bond. Specific examples include organic residues having an ethylenically unsaturated polymerizable group such as $-C(=O)\,CR^{14}=CH_2$, $-\,CHR^{14}=CH_2$, and $-CH_2CHR^{14}=CH_2$, and $R^{14}$ is a hydrogen atom or an alkyl group having 1 to 4 carbon atoms. $R^{11}$ may have various organic groups other than the ethylenically unsaturated polymerizable group, e.g., organic groups such as chain hydrocarbons, cyclic hydrocarbons, polyoxyalkylene groups, and polysiloxane groups, and these organic groups may be substituted with various substituents. $R^{11}$ is preferably $-C\,(=O)\,CR^{14}=CH_2$.

$R^{12}$ is a hydrocarbon group having 7 to 40 carbon atoms and preferably an alkyl group, such as a chain hydrocarbon group or a cyclic hydrocarbon group. Among them, a chain hydrocarbon group is preferable, and a linear saturated hydrocarbon group is particularly preferable. The number of carbon atoms of $R^{12}$ is 7 to 40, preferably 11 to 27, and particularly preferably 15 to 23.

$R^{13}$ is a hydrocarbon group having 1 to 5 carbon atoms, and preferably an alkyl group. The hydrocarbon group having 1 to 5 carbon atoms may be either linear or branched, may have an unsaturated bond, and is preferably linear. The number of carbon atoms of $R^{13}$ is preferably 2 to 4, and particularly preferably 2. $R^{13}$ is preferably an alkylene group.

The amide group-containing monomer may be a monomer having one kind of $R^{12}$ (for example, a compound in which $R^{12}$ has 17 carbon atoms) or a monomer having a combination of multiple kinds of $R^{12}$ (for example, a mixture of a compound in which $R^{12}$ has 17 carbon atoms and a compound in which $R^{12}$ has 15 carbon atoms) .

An example of the amide group-containing monomer is carboxylic acid amide alkyl (meth)acrylate.

Specific examples of the amide group-containing monomer include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethylamide (meth)acrylate, oleic acid ethylamide (meth)acrylate, tert-butylcyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether, and mixtures thereof.

The amide group-containing monomer is preferably stearic acid amide ethyl (meth)acrylate. The amide group-containing monomer may be a mixture containing stearic acid amide ethyl (meth)acrylate. In a mixture containing stearic acid amide ethyl (meth)acrylate, the amount of stearic acid amide ethyl (meth)acrylate is, for example, 55 to 99% by weight, preferably 60 to 85% by weight, and more preferably 65 to 80% by weight based on the weight of the entirety of the amide group-containing monomer, and the remainder of the monomer may be, for example, palmitic acid amide ethyl (meth) acrylate.

<u>(b) Acrylic monomer having hydrophilic group</u>

The acrylic monomer having a hydrophilic group (b) is a monomer different from the monomer (a), and is a hydrophilic monomer. The hydrophilic group is preferably an oxyalkylene group (the number of carbon atoms of the alkylene group is 2 to 6). In particular, the acrylic monomer having a hydrophilic group (b) is preferably polyalkylene glycol mono(meth)acrylate, polyalkylene glycol di(meth)acrylate, and/or polyalkylene glycol mono(meth)acrylamide. Polyalkylene glycol mono(meth)acrylate, polyalkylene glycol di(meth)acrylate, and polyalkylene glycol mono(meth)acrylamide are preferably those represented by general formulae:

$$CH_2=CX^2C(=O)-O-(RO)_n-X^3 \qquad (b1),$$

$$CH_2=CX^2C(=O)-O-(RO)_n-C(=O)CX^2=CH_2 \qquad (b2),$$

or

$$CH_2=CX^2C(=O)-NH-(RO)_n-X^3 \qquad (b3)$$

wherein,

$X^2$ is each independently a hydrogen atom or a methyl group,
$X^3$ is each independently is a hydrogen atom or an unsaturated or saturated hydrocarbon group having 1 to 22 carbon atoms,
R is each independently an alkylene group having 2 to 6 carbon atoms, and
n is an integer of 1 to 90. n may be, for example, 1 to 50, in particular 1 to 30, and especially 1 to 15 or 2 to 15. Alternatively, n may be, for example, 1.
R may be a linear or branched alkylene group such as a group represented by formula $-(CH_2)_x-$ or $-(CH_2)_{x1}-(CH(CH_3))_{x2}-$ wherein x1 and x2 are 0 to 6 such as 2 to 5, and the sum of x1 and x2 is 1 to 6; and the order of $-(CH_2)_{x1}-$ and $-(CH(CH_3))_{x2}-$ is not limited to the formula shown, and may be random.

In $-(RO)_n-$, there may be two or more kinds (such as 2 to 4 kinds, and in particular 2 kinds) of R, and thus $-(RO)_n-$ may be a combination of, for example, $-(R^1O)_{n1}-$ and $-(R^2O)_{n2}-$ wherein $R^1$ and $R^2$ are mutually different and an alkylene group having 2 to 6 carbon atoms, n1 and n2 are a number of 1 or more, and the sum of n1 and n2 is 2 to 90.

R in general formulae (b1), (b2), and (b3) is particularly preferably an ethylene group, a propylene group, or a butylene group. R in general formulae (b1), (b2), and (b3) may be a combination of two or more kinds of alkylene groups. In this case, at least one R is preferably an ethylene group, a propylene group, or a butylene group. Examples of the combination of R include a combination of an ethylene group/a propylene group, a combination of an ethylene group/a butylene group, and a combination of a propylene group/a butylene group. The monomer (b) may be a mixture of two or

more kinds. In this case, in at least one monomer (b), R in general formula (b1), (b2), or (b3) is preferably an ethylene group, a propylene group, or a butylene group. Polyalkylene glycol di(meth)acrylate represented by general formula (b2) is not preferably used solely as the monomer (b), and is preferably used in combination with the monomer (b1). In this case as well, the compound represented by general formula (b2) is preferably less than 30% by weight in the monomer (b) used.

Specific examples of the acrylic monomer having a hydrophilic group (b) include, but are not limited to, the following.

$CH_2=CHCOO-CH_2CH_2O-H$

$CH_2=CHCOO-CH_2CH_2CH_2O-H$

$CH_2=CHCOO-CH_2CH(CH_3)O-H$

$CH_2=CHCOO-CH(CH_3)CH_2O-H$

$CH_2=CHCOO-CH_2CH_2CH_2CH_2O-H$

$CH_2=CHCOO-CH_2CH_2CH(CH_3)O-H$

$CH_2=CHCOO-CH_2CH(CH_3)CH_2O-H$

$CH_2=CHCOO-CH(CH_3)CH_2CH_2O-H$

$CH_2=CHCOO-CH_2CH(CH_2CH_3)O-H$

$CH_2=CHCOO-CH_2C(CH_3)_2O-H$

$CH_2=CHCOO-CH(CH_2CH_3)CH_2O-H$

$CH_2=CHCOO-C(CH_3)_2CH_2O-H$

$CH_2=CHCOO-CH(CH_3)CH(CH_3)O-H$

$CH_2=CHCOO-C(CH_3)(CH_2CH_3)O-H$

$CH_2=CHCOO-(CH_2CH_2O)_2-H$

$CH_2=CHCOO-(CH_2CH_2O)_4-H$

$CH_2=CHCOO-(CH_2CH_2O)_5-H$

$CH_2=CHCOO-(CH_2CH_2O)_6-H$

$CH_2=CHCOO-(CH_2CH_2O)_5-CH_3$

$CH_2=CHCOO-(CH_2CH_2O)_9-CH_3$

$CH_2=CHCOO-(CH_2CH_2O)_{23}-CH_3$

$CH_2=CHCOO-(CH_2CH_2O)_{90}-CH_3$

$CH_2=CHCOO-(CH_2CH(CH_3)O)_9-H$

$CH_2=CHCOO-(CH_2CH(CH_3)O)_9-CH_3$

$CH_2=CHCOO-(CH_2CH(CH_3)O)_{12}-CH_3$

$CH_2=CHCOO-(CH_2CH_2O)_5-(CH_2CH(CH_3)O)_2-H$

$CH_2=CHCOO-(CH_2CH_2O)_5-(CH_2CH(CH_3)O)_3-CH_3$

$CH_2=CHCOO-(CH_2CH_2O)_8-(CH_2CH(CH_3)O)_6-CH_2CH(C_2H_5)C_4H_9$

$CH_2=CHCOO-(CH_2CH_2O)_{23}-OOC(CH_3)C=CH_2$

$CH_2=CHCOO-(CH_2CH_2O)_{20}-(CH_2CH(CH_3)O)_5-CH_2-CH=CH_2$

$CH_2=CHCOO-(CH_2CH_2O)_9-H$

$CH_2=C(CH_3)COO-CH_2CH_2O-H$

$CH_2=C(CH_3)COO-CH_2CH_2CH_2O-H$

$CH_2=C(CH_3)COO-CH_2CH(CH_3)O-H$

$CH_2=C(CH_3)COO-CH(CH_3)CH_2O-H$

$CH_2=C(CH_3)COO-CH_2CH_2CH_2CH_2O-H$

$CH_2=C(CH_3)COO-CH_2CH_2CH(CH_3)O-H$

$CH_2=C(CH_3)COO-CH_2CH(CH_3)CH_2O-H$

$CH_2=C(CH_3)COO-CH(CH_3)CH_2CH_2O-H$

$CH_2=C(CH_3)COO-CH_2CH(CH_2CH_3)O-H$

$CH_2=C(CH_3)COO-CH_2C(CH_3)_2O-H$

$CH_2=C(CH_3)COO-CH(CH_2CH_3)CH_2O-H$

$CH_2=C(CH_3)COO-C(CH_3)_2CH_2O-H$

$CH_2=C(CH_3)COO-CH(CH_3)CH(CH_3)O-H$

$CH_2=C(CH_3)COO-C(CH_3)(CH_2CH_3)O-H$

$CH_2=C(CH_3)COO-(CH_2CH_2O)_2-H$

$CH_2=C(CH_3)COO-(CH_2CH_2O)_4-H$

$CH_2=C(CH_3)COO-(CH_2CH_2O)_5-H$

$CH_2=C(CH_3)COO-(CH_2CH_2O)_6-H$

$CH_2=C(CH_3)COO-(CH_2CH_2O)_9-H$

$CH_2=C(CH_3)COO-(CH_2CH_2O)_5-CH_3$

$CH_2=C(CH_3)COO-(CH_2CH_2O)_9-CH_3$

$CH_2=C(CH_3)COO-(CH_2CH_2O)_{23}-CH_3$

$CH_2=C(CH_3)COO-(CH_2CH_2O)_{90}-CH_3$

$CH_2=C(CH_3)COO-(CH_2CH(CH_3)O)_9-H$

$CH_2=C\ (CH_3)COO-(CH_2CH(CH_3)O)_9-CH_3$

$CH_2=C\ (CH_3)COO-(CH_2CH(CH_3)O)_{12}-CH_3$

$CH_2=C\ (CH_3)COO-(CH_2CH_2O)_5-(CH_2CH(CH_3)O)_2-H$

$CH_2=C\ (CH_3)COO-(CH_2CH_2O)_5-(CH_2CH(CH_3)O)_3-CH_3$

$CH_2=C\ (CH_3)COO-(CH_2CH_2O)_8-(CH_2CH(CH_3)O)_6-CH_2CH\ (C_2H_5)C_4H_9$

$CH_2=C\ (CH_3)COO-(CH_2CH_2O)_{23}-OOC(CH_3)C=CH_2$

$CH_2=C\ (CH_3)COO-(CH_2CH_2O)_{20}-(CH_2CH(CH_3)O)_5-CH_2-CH=CH_2$

$CH_2=CH-C\ (=O)\ -NH-CH_2CH_2O-H$

$CH_2=CH-C\ (=O)-NH-CH_2CH_2CH_2O-H$

$CH_2=CH-C\ (=O)-NH-CH_2CH(CH_3)O-H$

$CH_2=CH-C\ (=O)-NH-CH(CH_3)CH_2O-H$

$CH_2=CH-C\ (=O)-NH-CH_2CH_2CH_2CH_2O-H$

$CH_2=CH-C\ (=O)-NH-CH_2CH_2CH(CH_3)O-H$

$CH_2=CH-C\ (=O)\ -NH-CH_2CH\ (CH_3)CH_2O-H$

$CH_2=CH-C\ (=O)\ -NH-CH\ (CH_3)CH_2CH_2O-H$

$CH_2=CH-C\ (=O)\ -NH-CH_2CH\ (CH_2CH_3)O-H$

$CH_2=CH-C\ (=O)\ -NH-CH_2C(CH_3)_2O-H$

$CH_2=CH-C\ (=O)\ -NH-CH\ (CH_2CH_3)CH_2O-H$

$CH_2=CH-C\ (=O)\ -NH-C\ (CH_3)\ _2CH_2O-H$

$CH_2=CH-C\ (=O)\ -NH-CH\ (CH_3)\ CH\ (CH_3)\ O-H$

$CH_2=CH-C\ (=O)\ -NH-C\ (CH_3)\ (CH_2CH_3)O-H$

$CH_2=CH-C\ (=O)\ -NH-\ (CH_2CH_2O)_2-H$

$CH_2=CH-C\ (=O)\ -NH-\ (CH_2CH_2O)_4-H$

$CH_2=CH-C\ (=O)\ -NH-\ (CH_2CH_2O)_5-H$

$CH_2=CH-C\ (=O)\ -NH-\ (CH_2CH_2O)_6-H$

$CH_2=CH-C\ (=O)\ -NH-\ (CH_2CH_2O)_9-H$

$CH_2=CH-C\ (=O)\ -NH-\ (CH_2CH_2O)_5-CH_3$

$CH_2=CH-C\ (=O)\ -NH-\ (CH_2CH_2O)_9-CH_3$

$CH_2=CH-C\ (=O)\ -NH-\ (CH_2CH_2O)_{23}-CH_3$

$CH_2$=CH-C (=O) -NH- $(CH_2CH_2O)_{90}$-$CH_3$

$CH_2$=CH-C (=O) -NH- $(CH_2CH (CH_3)O)_9$-H

$CH_2$=CH-C (=O) -NH- $(CH_2CH (CH_3) O)_9$-$CH_3$

$CH_2$=CH-C (=O) -NH- $(CH_2CH(CH_3)O)_{12}$-$CH_3$

$CH_2$=CH-C (=O) -NH- $(CH_2CH_2O)_5$-$(CH_2CH(CH_3)O)_2$-H

$CH_2$=CH-C (=O) -NH- $(CH_2CH_2O)_5$-$(CH_2CH(CH_3)O)_3$-$CH_3$

$CH_2$=CH-C (=O) -NH- $(CH_2CH_2O)_8$-$(CH_2CH(CH_3)O)_6$-$CH_2CH$ $(C_2H_5)$ $C_4H_9$

$CH_2$=C $(CH_3)$-C(=O)-NH-$CH_2CH_2O$-H

$CH_2$=C$(CH_3)$-C(=O)-NH-$CH_2CH_2CH_2O$-H

$CH_2$=C$(CH_3)$-C(=O)-NH-$CH_2CH(CH_3)O$-H

$CH_2$=C$(CH_3)$-C(=O)-NH-$CH(CH_3)CH_2O$-H

$CH_2$=C$(CH_3)$-C(=O)-NH-$CH_2CH_2CH_2CH_2O$-H

$CH_2$=C$(CH_3)$-C(=O)-NH-$CH_2CH_2CH(CH_3)O$-H

$CH_2$=C$(CH_3)$-C(=O)-NH-$CH_2CH(CH_3)CH_2O$-H

$CH_2$=C$(CH_3)$-C(=O)-NH-$CH(CH_3)CH_2CH_2O$-H

$CH_2$=C$(CH_3)$-C(=O)-NH-$CH_2CH(CH_2CH_3)O$-H

$CH_2$=C$(CH_3)$-C(=O)-NH-$CH_2C(CH_3)_2O$-H

$CH_2$=C$(CH_3)$-C(=O)-NH-$CH(CH_2CH_3)CH_2O$-H

$CH_2$=C$(CH_3)$-C(=O)-NH-$C(CH_3)_2CH_2O$-H

$CH_2$=C$(CH_3)$-C(=O)-NH-$CH(CH_3)CH(CH_3)O$-H

$CH_2$=C$(CH_3)$-C(=O)-NH-$C(CH_3)(CH_2CH_3)O$-H

$CH_2$=C$(CH_3)$-C(=O)-NH-$(CH_2CH_2O)_2$-H

$CH_2$=C$(CH_3)$-C(=O)-NH-$(CH_2CH_2O)_4$-H

$CH_2$=C$(CH_3)$-C(=O)-NH-$(CH_2CH_2O)_5$-H

$CH_2$=C$(CH_3)$-C(=O)-NH-$(CH_2CH_2O)_6$-H

$CH_2$=C$(CH_3)$-C(=O)-NH-$(CH_2CH_2O)_9$-H

$CH_2$=C$(CH_3)$-C(=O)-NH-$(CH_2CH_2O)_5$-$CH_3$

$CH_2$=C$(CH_3)$-C(=O)-NH-$(CH_2CH_2O)_9$-$CH_3$

$CH_2$=C$(CH_3)$-C(=O)-NH-$(CH_2CH_2O)_{23}$-$CH_3$

$CH_2=C(CH_3)-C(=O)-NH-(CH_2CH_2O)_{90}-CH_3$

$CH_2=C(CH_3)-C(=O)-NH-(CH_2CH(CH_3)O)_9-H$

$CH_2=C(CH_3)-C(=O)-NH-(CH_2CH(CH_3)O)_9-CH_3$

$CH_2=C(CH_3)-C(=O)-NH-(CH_2CH(CH_3)O)_{12}-CH_3$

$CH_2=C(CH_3)-C(=O)-NH-(CH_2CH_2O)_5-(CH_2CH(CH_3)O)_2-H$

$CH_2=C(CH_3)-C(=O)-NH-(CH_2CH_2O)_5-(CH_2CH(CH_3)O)_3-CH_3$

$CH_2=C(CH_3)-C(=O)-NH-(CH_2CH_2O)_8-(CH_2CH(CH_3)O)_6-CH_2CH(C_2H_5)C_4H_9$

The monomer (b) is preferably acrylate or acrylamide in which $X^2$ is a hydrogen atom. In particular, hydroxyethyl acrylate, hydroxypropyl acrylate, hydroxybutyl acrylate, or hydroxyethyl acrylamide is preferable.

<u>(c) Monomer having ion donating group</u>

The monomer having an ion donating group (c) is a monomer different from the monomer (a) and the monomer (b) . The monomer (c) is preferably a monomer having an olefinic carbon-carbon double bond and an ion donating group. The ion donating group is an anion donating group and/or a cation donating group.

Examples of the monomer having an anion donating group include monomers having a carboxyl group, a sulfonic acid group, or a phosphoric acid group. Specific examples of the monomer having an anion donating group include (meth) acrylic acid, crotonic acid, maleic acid, fumaric acid, itaconic acid, citraconic acid, vinyl sulfonic acid, (meth)allylsulfonic acid, styrenesulfonic acid, phosphoric acid (meth)acrylate, vinylbenzenesulfonic acid, acrylamide tert-butyl sulfonic acid, and salts thereof.

Examples of salts of the anion donating group include alkali metal salts, alkaline earth metal salts, and ammonium salts, such as a methyl ammonium salt, an ethanol ammonium salt, and a triethanol ammonium salt.

In the monomer having a cation donating group, examples of the cation donating group include an amino group and preferably a tertiary amino group and a quaternary amino group. In the tertiary amino group, two groups bonded to the nitrogen atom are the same or different and are preferably an aliphatic group having 1 to 5 carbon atoms (in particular an alkyl group), an aromatic group having 6 to 20 carbon atoms (an aryl group), or an araliphatic group having 7 to 25 carbon atoms (in particular an aralkyl group such as a benzyl group ($C_6H_5-CH_2-$)). In the quaternary amino group, three groups bonded to the nitrogen atom are the same or different and are preferably an aliphatic group having 1 to 5 carbon atoms (in particular an alkyl group), an aromatic group having 6 to 20 carbon atoms (an aryl group), or an araliphatic group having 7 to 25 carbon atoms (in particular an aralkyl group such as a benzyl group ($C_6H_5-CH_2-$)) . In the tertiary and quaternary amino groups, the remaining one group bonded to the nitrogen atom may have a carbon-carbon double bond. The cation donating group may be in the form of a salt.

A cation donating group that is a salt is a salt formed with an acid (an organic acid or an inorganic acid) . Organic acids such as carboxylic acids having 1 to 20 carbon atoms (in particular, monocarboxylic acids such as acetic acid, propionic acid, butyric acid, and stearic acid) are preferable. Dimethylaminoethyl (meth)acrylate, diethylaminoethyl (meth) acrylate, and salts thereof are preferable.

Specific examples of the monomer having a cation donating group are as follows.

$CH_2=CHCOO-CH_2CH_2-N(CH_3)_2$ and salts thereof (such as acetate) $CH_2=CHCOO-CH_2CH_2-N(CH_2CH_3)_2$ and salts thereof (such as acetate)
$CH_2=C(CH_3)COO-CH_2CH_2-N(CH_3)_2$ and salts thereof (such as acetate)
$CH_2=C(CH_3)COO-CH_2CH_2-N(CH_2CH_3)_2$ and salts thereof (such as acetate)
$CH_2=CHC(O)N(H)-CH_2CH_2CH_2-N(CH_3)_2$ and salts thereof (such as acetate)
$CH_2=CHCOO-CH_2CH_2-N(-CH_3)(-CH_2-C_6H_5)$ and salts thereof (such as acetate)
$CH_2=C(CH_3)COO-CH_2CH_2-N(-CH_2CH_3)(-CH_2-C_6H_5)$ and salts thereof (such as acetate)

$CH_2=CHCOO-CH_2CH_2-N^+(CH_3)_3Cl^-$

$CH_2=CHCOO-CH_2CH_2-N^+(-CH_3)_2(-CH_2-C_6H_5)Cl^-$

$CH_2=C(CH_3)COO-CH_2CH_2-N^+(CH_3)_3Cl^-$

$CH_2=CHCOO-CH_2CH(OH)CH_2-N^+(CH_3)_3Cl^-$

$CH_2=C(CH_3)COO-CH_2CH(OH)CH_2-N^+(CH_3)_3Cl^-$

$CH_2=C(CH_3)COO-CH_2CH(OH)CH_2-N^+(-CH_2CH_3)_2(-CH_2-C_6H_5)Cl^-$

$CH_2=C(CH_3)COO-CH_2CH_2-N^+(CH_3)_3Br^-$

$CH_2=C(CH_3)COO-CH_2CH_2-N^+(CH_3)_3I^-$

$CH_2=C(CH_3)COO-CH_2CH_2-N^+(CH_3)_3O^-SO_3CH_3$

$CH_2=C(CH_3)COO-CH_2CH_2-N^+(CH_3)(-CH_2-C_6H_5)_2Br^-$

The monomer having an ion donating group (c) is preferably methacrylic acid, acrylic acid, and dimethylaminoethyl methacrylate, and more preferably methacrylic acid and dimethylaminoethyl methacrylate.

(d) Another monomer

Another monomer (d) is a monomer different from the monomers (a), (b), and (c) . Examples of such another monomer include ethylene, vinyl acetate, vinyl chloride, halogenated vinyl styrene, α-methylstyrene, p-methylstyrene, polyoxyalkylene mono(meth)acrylate, (meth)acrylamide, diacetone (meth)acrylamide, methylollated (meth)acrylamide, N-methylol (meth)acrylamide, alkyl vinyl ether, halogenated alkyl vinyl ether, alkyl vinyl ketone, butadiene, isoprene, chloroprene, glycidyl (meth)acrylate, aziridinyl (meth)acrylate, benzyl (meth)acrylate, isocyanate ethyl (meth)acrylate, cyclohexyl (meth)acrylate, isobornyl (meth)acrylate, short-chain alkyl (meth)acrylate, maleic anhydride, (meth)acrylate having a polydimethylsiloxane group, and N-vinylcarbazole.

The amount of the repeating unit formed from the monomer (a) may be 30 to 95% by weight, preferably 40 to 88% by weight, and more preferably 50 to 85% by weight, based on the hydrocarbon group-containing polymer (in particular, an acrylic polymer).

The amount of the repeating unit formed from the monomer (b) may be 5 to 70% by weight, preferably 8 to 50% by weight, and more preferably 10 to 40% by weight, based on the hydrocarbon group-containing polymer.

The amount of the repeating unit formed from the monomer (c) may be 0.1 to 30% by weight, preferably 0.5 to 20% by weight, and more preferably 1 to 15% by weight, based on the hydrocarbon group-containing polymer.

The amount of the repeating unit formed from the monomer (d) may be 0 to 20% by weight, such as 1 to 15% by weight, and in particular 2 to 10% by weight, based on the hydrocarbon group-containing polymer.

The weight average molecular weight of the hydrocarbon group-containing polymer may be 1,000 to 10,000,000, preferably 5,000 to 8,000,000, and more preferably 10,000 to 4,000,000. The weight average molecular weight is a value obtained in terms of polystyrene by gel permeation chromatography.

Herein, "(meth)acryl" means acryl or methacryl. For example, "(meth)acrylate" means acrylate or methacrylate.

From the viewpoint of oil resistance, the hydrocarbon group-containing polymer (in particular, an acrylic polymer) is preferably a random copolymer rather than a block copolymer.

Polymerization for the hydrocarbon group-containing polymer is not limited, and various polymerization methods can be selected, such as bulk polymerization, solution polymerization, emulsion polymerization, and radiation polymerization. For example, in general, solution polymerization involving an organic solvent, and emulsion polymerization involving water or involving an organic solvent and water in combination, are selected. The hydrocarbon group-containing copolymer after polymerization is diluted with water to be emulsified in water and thus formed into a treatment liquid.

Herein, it is preferable that after polymerization (for example, solution polymerization or emulsion polymerization, preferably solution polymerization), water is added, and then the solvent is removed to disperse the polymer in water. An emulsifier does not need to be added, and a self-dispersive product can be produced.

Examples of organic solvents include ketones such as acetone and methyl ethyl ketone, esters such as ethyl acetate and methyl acetate, glycols such as propylene glycol, dipropylene glycol monomethyl ether, N-methyl-2-pyrrolidone (NMP), dipropylene glycol, tripropylene glycol, and low molecular weight polyethylene glycol, and alcohols such as ethyl alcohol and isopropanol.

For example, peroxide, an azo compound, or a persulfate compound can be used as a polymerization initiator. The polymerization initiator is, in general, water-soluble and/or oil-soluble.

Specific examples of the oil-soluble polymerization initiator preferably include 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexan-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, and t-butyl perpivalate.

Specific examples of the water-soluble polymerization initiator preferably include 2,2'-azobisisobutylamidine dihydrochloride, 2,2'-azobis(2-methylpropionamidine) hydrochloride, 2,2'-azobis[2-(2-imidazolin-2-yl)propane] hydrochloride, 2,2'-azobis[2-(2-imidazolin-2-yl)propane] sulfate hydrate, 2,2'-azobis[2-(5-methyl-2-imidazolin-2-yl)propane] hydrochloride, potassium persulfate, barium persulfate, ammonium persulfate, and hydrogen peroxide.

The polymerization initiator is used in the range of 0.01 to 5 parts by weight based on 100 parts by weight of the monomers.

In order to regulate the molecular weight, a chain transfer agent such as a mercapto group-containing compound may be used, and specific examples thereof include 2-mercaptoethanol, thiopropionic acid, and alkyl mercaptan. The mercapto group-containing compound is used in the range of 10 parts by weight or less, or 0.01 to 5 parts by weight, based on 100 parts by weight of the monomers.

Specifically, the hydrocarbon group-containing polymer can be produced as follows.

In solution polymerization, a method is employed that involves dissolving the monomers in an organic solvent, performing nitrogen purge, then adding a polymerization initiator, and heating and stirring the mixture, for example, in the range of 40 to 120°C for 1 to 10 hours. The polymerization initiator may be, in general, an oil-soluble polymerization initiator.

The organic solvent is inert to and dissolves the monomers, and examples include ketones such as acetone and methyl ethyl ketone, esters such as ethyl acetate and methyl acetate, glycols such as propylene glycol, dipropylene glycol monomethyl ether, N-methyl-2-pyrrolidone (NMP), dipropylene glycol, tripropylene glycol, and low molecular weight polyethylene glycol, alcohols such as ethyl alcohol and isopropanol, and hydrocarbon solvents such as n-heptane, n-hexane, n-octane, cyclohexane, methylcyclohexane, cyclopentane, methylcyclopentane, methylpentane, 2-ethylpentane, isoparaffin hydrocarbon, liquid paraffin, decane, undecane, dodecane, mineral spirit, mineral turpen, and naphtha. Preferable examples of the solvent include acetone, chloroform, HCHC 225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane, trichlorotrifluoroethane, N-methyl-2-pyrrolidone (NMP), and dipropylene glycol monomethyl ether (DPM). The organic solvent is used in the range of 50 to 2,000 parts by weight, such as 50 to 1,000 parts by weight, based on total 100 parts by weight of the monomers.

In emulsion polymerization, a method is employed that involves emulsifying the monomers in water in the presence of an emulsifier, performing nitrogen purge, then adding a polymerization initiator, and stirring the mixture in the range of 40 to 80°C for 1 to 10 hours for polymerization. As the polymerization initiator, a water-soluble polymerization initiator such as 2,2'-azobisisobutylamidine dihydrochloride, 2,2'-azobis(2-methylpropionamidine) hydrochloride. 2,2'-azobis[2-(2-imidazolin-2-yl)propane] hydrochloride, 2,2'-azobis[2-(2-imidazolin-2-yl)propane] sulfate hydrate, 2,2'-azobis[2-(5-methyl-2-imidazolin-2-yl)propane] hydrochloride, potassium persulfate, barium persulfate, ammonium persulfate, or hydrogen peroxide; or an oil-soluble polymerization initiator such as 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexan-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, or t-butyl perpivalate is used. The polymerization initiator is used in the range of 0.01 to 10 parts by weight based on 100 parts by weight of the monomers.

In order to obtain a water dispersion of the polymer, that has excellent stability when being left to stand, it is desirable that the monomers are formed into particles in water by using an emulsifying apparatus capable of applying strong crushing energy such as a high-pressure homogenizer or an ultrasonic homogenizer, and polymerized by using an oil-soluble polymerization initiator. Various anionic, cationic, or nonionic emulsifiers can be used as emulsifiers, and are used in the range of 0.5 to 20 parts by weight based on 100 parts by weight of the monomers. An anionic and/or nonionic and/or cationic emulsifier is preferably used. When the monomers are not completely compatible, a compatibilizer such as a water-soluble organic solvent or a low molecular weight monomer that causes the monomers to be sufficiently compatible is preferably added. By adding a compatibilizer, emulsifiability and copolymerizability can be increased.

Examples of the water-soluble organic solvent include acetone, propylene glycol, dipropylene glycol monomethyl ether (DPM), dipropylene glycol, tripropylene glycol, ethanol, N-methyl-2-pyrrolidone (NMP), 3-methoxy-3-methyl-1-butanol, or isoprene glycol, and the water-soluble organic solvent may be used in the range of 1 to 50 parts by weight, such as 10 to 40 parts by weight, based on 100 parts by weight of water. By adding NMP or DPM or 3-methoxy-3-methyl-1-butanol or isoprene glycol (a preferable amount is, for example, 1 to 20% by weight, and particularly 3 to 10% by weight, based on the composition), the stability of the composition (in particular, the emulsion) is increased. Examples of the low molecular weight monomer include methyl methacrylate, glycidyl methacrylate, and 2,2,2-trifluoroethyl methacrylate, and the low molecular weight monomer may be used in the range of 1 to 50 parts by weight, such as 10 to 40 parts by weight, based on total 100 parts by weight of the monomers.

(2) Amphoteric polyacrylamide polymer

The amphoteric polyacrylamide polymer is a copolymer of (meth)acrylamide, a cationic monomer, and an anionic monomer. The amphoteric polyacrylamide polymer can be produced by polymerizing (meth)acrylamide, a cationic monomer, and an anionic monomer. The amphoteric polyacrylamide polymer can also be produced by Mannich modification or Hofmann modification of an acrylamide polymer (preferably an anionic acrylamide polymer).

Examples of the cationic monomer include a vinyl monomer having a tertiary amino group or a quaternary ammonium salt.

Examples of the vinyl monomer having a tertiary amino group include dialkylaminoalkyl (meth)acrylates such as dimethylaminoethyl (meth)acrylate, diethylaminoethyl (meth)acrylate, dimethylaminopropyl (meth)acrylate, and diethylaminopropyl (meth)acrylate; dialkylaminoalkyl (meth)acrylamides such as dimethylaminopropyl (meth)acrylamide and diethylaminopropyl (meth)acrylamide; inorganic acid salts such as hydrochloride and sulfate of the vinyl monomer having a tertiary amino group; and organic acid salts such as formate and acetate of the vinyl monomer having a tertiary amino group.

Examples of the vinyl monomer having a quaternary ammonium salt include a vinyl monomer obtained by reacting a vinyl monomer having a tertiary amino group with a quaternizing agent. Examples of the quaternizing agent include alkyl halides such as methyl chloride and methyl bromide, aralkyl halides such as benzyl chloride and benzyl bromide, dimethyl sulfate, diethyl sulfate, epichlorohydrin, 3-chloro-2-hydroxypropyl trimethylammonium chloride, and glycidyl trialkylammonium chloride. These vinyl monomers having a tertiary amino group or a quaternary ammonium salt may be used alone or in combination of two or more.

Examples of an anionic vinyl monomer include unsaturated monocarboxylic acid, unsaturated dicarboxylic acid, unsaturated tricarboxylic acid, unsaturated tetracarboxylic acid, unsaturated sulfonic acid, unsaturated phosphonic acid, and salts thereof.

Examples of the unsaturated monocarboxylic acid and a salt thereof include acrylic acid, methacrylic acid, 2-(meth)acrylamido-N-glycolic acid, N-acryloylglycine, 3-acrylamidopropanoic acid, and 4-acrylamidobutanoic acid, and alkali metal salts thereof, such as sodium and potassium salts, or ammonium salts thereof.

Examples of the unsaturated dicarboxylic acid and a salt thereof include maleic acid, fumaric acid, itaconic acid, citraconic acid, and alkali metal salts thereof, such as sodium and potassium salts, or ammonium salts thereof.

Examples of the unsaturated tricarboxylic acid and a salt thereof include aconitic acid, 3-butene-1,2,3-tricarboxylic acid, 4-pentene-1,2,4-tricarboxylic acid, and alkali metal salts thereof, such as sodium and potassium salts, or ammonium salts thereof.

Examples of unsaturated tetracarboxylic acid and a salt thereof include 1-pentene-1,1,4,4-tetracarboxylic acid, 4-pentene-1,2,3,4-tetracarboxylic acid, 3-hexene-1,1,6,6-tetracarboxylic acid, and alkali metal salts thereof, such as sodium and potassium salts, or ammonium salts thereof.

Examples of the unsaturated sulfonic acid include vinyl sulfonic acid, styrenesulfonic acid, 2-acrylamido-2-methylpropanesulfonic acid, and alkali metal salts thereof, such as sodium and potassium salts, or ammonium salts thereof.

Examples of the unsaturated phosphonic acid include vinylphosphonic acid, $\alpha$-phenylvinylphosphonic acid, and alkali metal salts thereof, such as sodium and potassium salts, or ammonium salts thereof.

Among the anionic vinyl monomers, unsaturated monocarboxylic acid and unsaturated dicarboxylic acid, specifically, acrylic acid, 2-acrylamido-N-glycolic acid, itaconic acid, and salts thereof, are particularly preferable from the viewpoint of paper strength improving effect and economic efficiency.

Based on the amphoteric polyacrylamide polymer, the amount of the (meth)acrylamide may be 70 to 99.8 mol% or 80 to 99 mol%, the amount of the cationic monomer may be 0.1 to 15 mol% or 0.5 to 10 mol%, and the amount of the anionic monomer may be 0.1 to 15 mol% or 0.5 to 10 mol%.

The amphoteric polyacrylamide polymer preferably has a cationic valence of -500 to 2000 $\mu$eq/g or -200 to 1000 $\mu$eq/g. Alternatively, the cationic valence may be -500 to 750 $\mu$eq/g, -300 to 500 $\mu$eq/g, or -200 to 300 $\mu$eq/g.

The cationic valence is calculated by the following method. First, 0.05 g of a polyacrylamide resin sample (usually an aqueous solution) to be measured is precisely weighed to make 100 ml with distilled water, 20 ml of which is taken out, and 0.5 ml of 0.1 N hydrochloric acid and 2 or 3 drops of toluidine blue indicator are added. This liquid is titrated with a 1/400 (= 0.0025) N polyvinyl potassium sulfate solution (hereinafter referred to as PVSK), and the point at which the liquid changes color from blue to reddish purple is regarded as an end point.

In the following formula (A), x, F, y and z indicates a PVSK titer (ml), a factor of PVSK, a mass (g) of the polyacrylamide resin sample, and a solid content concentration (% by mass) of the polyacrylamide resin in the sample, respectively.

[Expression 1]

$$Cationic\ valance\,(meq/g) = \frac{x \times F \times 10}{y \times 800} \times \frac{100}{z} \quad \cdots (A)$$

(3) Anionic polyacrylamide polymer

The anionic polyacrylamide polymer is a copolymer of (meth)acrylamide and an anionic monomer. The anionic polyacrylamide polymer can be produced by polymerizing (meth)acrylamide and an anionic monomer.

The anionic monomer is the same as the anionic monomer (anionic vinyl monomer) described for the amphoteric polyacrylamide polymer.

Based on the anionic polyacrylamide polymer, the amount of the (meth)acrylamide may be 70 to 99.8 mol% or 80 to 99 mol%, and the amount of the anionic monomer may be 0.2 to 30 mol% or 1 to 20 mol%.

(4) Another component

The oil-resistant agent (oil-resistant agent composition) may contain another component (4) other than the hydrocarbon group-containing polymer (1), the cationic polyacrylamide polymer (2), and the anionic polyacrylamide polymer (3). Examples of another component (4) include an aqueous medium and an emulsifier.

The aqueous medium is water or a mixture of water and an organic solvent (an organic solvent miscible with water). The amount of the aqueous medium may be 50% by weight to 99.99% by weight based on the total amount of the hydrocarbon group-containing polymer (1) and the aqueous medium.

The amount of the emulsifier may be 0 to 30 parts by weight, such as 0.1 to 10 parts by weight, based on 100 parts by weight of the hydrocarbon group-containing polymer (1).

[Oil-resistant agent (oil-resistant agent composition)]

The oil-resistant agent (oil-resistant agent composition) may be in the form of a solution, an emulsion, or an aerosol. The oil-resistant agent may contain a liquid medium. The liquid medium is, for example, an organic solvent and/or water, and preferably an aqueous medium. The aqueous medium is water or a mixture of water and an organic solvent (such as polypropylene glycol and/or a derivative thereof).

In the case of a dispersion (emulsion) form, the hydrocarbon group-containing polymer is a water dispersion type that is dispersed in an aqueous medium, and the hydrocarbon group-containing polymer(1) may be self-emulsified, dispersed in the aqueous medium in the form of a neutralized salt, or emulsified using an emulsifier.

The ionic charge density of the oil-resistant agent may be -5,000 μeq/g or more, -2,500 μeq/g or more, -1,500 μeq/g or more, -500 μeq/g or more, 0 μeq/g or more, 100 μeq/g or more, or 200 μeq/g or more, and is preferably - 2,500 μeq/g or more, and more preferably -400 μeq/g or more, such as 0 μeq/g or more. The ionic charge density of the oil-resistant agent may be 7,500 μeq/g or less, 5,000 μeq/g or less, 2,500 μeq/g or less, 1,000 μeq/g or less, 500 μeq/g or less, 350 μeq/g or less, 300 μeq/g or less, or 250 μeq/g or less, and is preferably 5,000 μeq/g or less, and more preferably 800 μeq/g or less, such as 300 μeq/g or less. In particular, the ionic charge density of the oil-resistant agent is preferably -2,500 to 5,000 μeq/g, and more preferably -400 to 800 μeq/g (such as 210 μeq/g, 250 μeq/g, or 300 peq/g). The ionic charge density of the oil-resistant agent can be measured by, for example, the following method. Here, the ionic charge density of the oil-resistant agent may be an ionic charge density of the oil-resistant agent before the addition of the cationic polyacrylamide polymer (2) and/or the anionic polyacrylamide polymer (3), and in particular the hydrocarbon group-containing polymer (1) (water dispersion of hydrocarbon group-containing polymer (1)).

<Measurement of ionic charge density>

The anionic demand of a 0.1 g/L aqueous sample solution is measured with a particle charge analyzer (MUTEK PCD-04, manufactured by BTG) using a 1/1000 standardized potassium polyvinylsulfonate solution to calculate the ionic charge density (cationic charge density) from the following formula (1). Alternatively, the cationic demand is similarly measured using a polydiallyldimethylammonium chloride solution instead of potassium polyvinylsulfonate to calculate the ionic charge density (anionic charge density) from the following formula (1). [Expression 2]

$$\text{Ionic charge density } (\mu eq/g) = A/B \qquad (1)$$

A: Cationic demand or anionic demand (μeq/L)
B: Sample solution concentration (g/L)

The oil-resistant agent can be used to treat a paper substrate. The "treatment" means that the oil-resistant agent is applied to the inside and/or outside of paper.
The oil-resistant agent can be applied to the treatment target by a conventionally known method. The oil-resistant agent is mainly present inside the paper through internal treatment.
Examples of the treatment-target paper substrate include paper, a container made of paper, and a molded article made of paper (for example, molded pulp).
The hydrocarbon group-containing polymer is favorably anchored to the paper substrate (the inside or the front side of the paper substrate).
The oil-resistant agent should be used such that the amount of hydrocarbon group-containing polymer (1) is 0.01 to 75 parts by weight, such as 0.1 to 60 parts by weight, based on 100 parts by weight of pulp solids.

[Oil-resistant agent kit]

Herein, a "oil-resistant agent kit" refers to components of an oil-resistant agent added to a substrate (in particular a paper raw material, such as a pulp and a pulp slurry) which are separately prepared and stored separately.
The oil-resistant agent kit in the present disclosure may have:

a liquid containing (1) a hydrocarbon group-containing polymer and
a liquid containing (2) an amphoteric polyacrylamide polymer. The oil-resistant agent kit may further contain a liquid containing (3) an anionic polyacrylamide polymer.

When using the oil-resistant agent kit, the liquid (1) and liquid (2), preferably liquid (1), liquid (2), and liquid (3), may be added to the substrate all at the same time, at least two at the same time, or all separately, preferably separately in this order. For example, there is a method in which the liquid (1) is first added to the substrate, and then the liquid (2) and the liquid (3) are added at the same time or separately, preferably separately in this order. It is preferable to first add the liquid (1) since the hydrocarbon group can be efficiently anchored to the substrate, and the effect of the present disclosure can be improved.

[Papermaking]

Paper can be produced by a conventionally known papermaking method. An internal treatment method in which the oil-resistant agent is added to a pulp or a pulp slurry (pulp (slurry)) before papermaking, or an external treatment method in which the oil-resistant agent is applied to paper after papermaking, can be used. The method of treatment with the oil-resistant agent in the present disclosure is preferably an internal treatment method. Even if the oil-resistant agent of the present disclosure is used in the internal treatment, no new equipment is required.
In the internal treatment method, paper treated by the oil-resistant agent may be produced by mixing the oil-resistant agent with pulp slurry and paper making. The paper treated by the oil-resistant agent is oil-resistant paper having oil resistance. The oil-resistant paper can be thin or thick, or molded pulp.
Paper thus treated, after rough drying at room temperature or high temperature, is optionally subjected to a heat treatment that can have a temperature range of up to 300°C, such as up to 200°C, and in particular 80°C to 180°C, depending on the properties of the paper, and thus shows excellent oil resistance and water resistance.
The present disclosure can be used in gypsum board base paper, coated base paper, wood containing paper, commonly used liner and corrugating medium, neutral machine glazed paper, neutral liner, rustproof liner and metal laminated paper, kraft paper, and the like. The present disclosure can also be used in neutral printing writing paper, neutral coated base paper, neutral PPC paper, neutral heat sensitive paper, neutral pressure sensitive base paper, neutral inkjet paper, and neutral communication paper.
A pulp (pulp raw material) may be any of bleached or unbleached chemical pulp such as kraft pulp or sulfite pulp, bleached or unbleached high yield pulp such as ground pulp, mechanical pulp, or thermomechanical pulp, waste paper pulp such as waste newspaper, waste magazine, waste corrugated cardboard, or waste deinked paper, and non-wood pulp such as bagasse pulp, kenaf pulp, or bamboo pulp. The pulp raw material may be a combination of one or more of these. A mixture of the above pulp raw material and one or more of synthetic fiber of asbestos, polyamide, polyimide, polyester, polyolefin, or the like can be used as well.
In the internal treatment, a pulp slurry having a pulp concentration of 0.1 to 5.0% by weight (such as 0.3 to 4.0% by weight) is preferably formed into paper. An additive (such as a sizing agent, a paper strengthening agent, a flocculant, a retention aid, or a coagulant) and the hydrocarbon group-containing polymer can be added to the pulp slurry.

A preferred method is to add an additive (such as an amphoteric polyacrylamide-based polymer) and a hydrocarbon group-containing polymer to the pulp slurry before forming a paper layer. Internal addition in a molded pulp that directly molds a paper container is also possible. At this time, a mixture obtained by mixing additive substances in advance may be added, or each of the additive substances may be separately prepared and added at the same time, or one of the additive substances may be added first and then the other additive substance may be added. It is preferable to first add the hydrocarbon group-containing polymer, followed by the amphoteric polyacrylamide-based polymer, since the hydrocarbon group can be efficiently anchored to the pulp.

Since the pulp is generally anionic, at least one of the additive and the hydrocarbon group-containing polymer is preferably cationic or amphoteric such that the additive and the hydrocarbon group-containing polymer are favorably anchored to paper. A combination of a cationic or amphoteric additive and an anionic hydrocarbon group-containing polymer, a combination of an anionic additive and a cationic or amphoteric hydrocarbon group-containing polymer, and a combination of a cationic or amphoteric additive and hydrocarbon group-containing polymer are preferably used.

Other components (additives) may be used in addition to the oil-resistant agent. Examples of other components are cationic coagulants, water-resistant agents, paper strength additives, flocculants, fixing agents, and yield improvers.

Cationic coagulants, paper strength additives, flocculants, fixing agents, and yield improvers can be polymers or inorganic materials that are cationic or amphoteric. The cationic coagulants, paper strength additives, flocculants, fixing agents, and yield improvers can effectively anchor the oil-resistant agent consisting of the hydrocarbon group-containing polymer (1) to the pulp, which is generally anionic, and the gas barrier properties and/or water resistance and oil resistance of the finally obtained molded pulp container can be enhanced.

Examples of cationic coagulants, paper strength additives, flocculants, fixing agents, and yield improvers include a polyamine epichlorohydrin resin, a polyamide epichlorohydrin resin, cationic polyacrylamide (an acrylamide-allylamine copolymer, an acrylamide-dimethylaminoethyl (meth)acrylate copolymer, an acrylamide-diethylaminoethyl (meth)acrylate copolymer, an acrylamide-quaternized dimethylaminoethyl (meth)acrylate copolymer, an acrylamide-quaternized diethylaminoethyl (meth)acrylate copolymer, or the like), polydiallyldimethylammonium chloride, polyallylamine, polyvinylamine, polyethyleneimine, an N-vinylformamide-vinylamine copolymer, a melamine resin, a polyamide epoxy resin, sulfate band, PAC (polyaluminum chloride), aluminum chloride, and ferric chloride. In particular, polyamidepolyamine-epichlorohydrin (PAE), polydiallyldimethylammonium chloride (poly-DADMAC), polyacrylamide (PAM), and the like can be used.

A water-resistant agent may be used in addition to the oil-resistant agent. In the present disclosure, the "water-resistant agent" refers to a component that, when added to the pulp slurry, is capable of increasing the water resistance of a molded pulp product as compared to the case where it is not added (provided that the above-described oil-resistant agent is excluded). Due to the water-resistant agent, the water resistance of the finally obtained molded pulp container can be increased. The above-described cationic coagulant is generally incapable of increasing water resistance by itself and can be understood as being different from the water-resistant agent.

A sizing agent or the like that is used in ordinary papermaking is usable as a water-resistant agent. Examples of the water-resistant agent include cationic sizing agents, anionic sizing agents, and rosin-based sizing agents (such as acidic rosin-based sizing agents or neutral rosin-based sizing agents), and cationic sizing agents are preferable. In particular, a styrene-containing polymer such as a styrene-(meth)acrylate copolymer, an alkenyl succinic anhydride, and an alkyl ketene dimer are preferable.

If necessary, a dye, a fluorescent dye, a slime control agent, an antislip agent, an antifoaming agent, and a pitch control agent that are usually used as paper making chemicals in paper treatment agents may also be used.

Paper is preferably a molded pulp product. The molded pulp product can be produced by a producing method comprising: preparing a formulated pulp slurry by adding an oil-resistant agent to a slurry in which pulp is dispersed in an aqueous medium, making a molded pulp intermediate, followed by dehydrating and then at least drying to obtain a molded pulp product.

The hydrocarbon group-containing polymer and the amphoteric polyacrylamide polymer, preferably the hydrocarbon group-containing polymer, the amphoteric polyacrylamide polymer, and the anionic polyacrylamide polymer may be added to the pulp (slurry) all at the same time, at least two at the same time, or all separately, preferably separately in this order. For example, there is a method in which the hydrocarbon group-containing polymer is first added to the pulp (slurry), and then the amphoteric polyacrylamide-based polymer and the anionic polyacrylamide polymer are added at the same time or separately, preferably separately in this order. It is preferable to first add the hydrocarbon group-containing polymer since the hydrocarbon group can be efficiently anchored to the pulp, and the effect of the present disclosure can be improved.

The content of each component in the formulated pulp slurry (based on all components) can be suitably selected so as to attain a high freeness suitable for papermaking and dehydrating and the physical properties desired of a molded pulp product, and, for example, can be as follows.

Aqueous medium: 89.5 to 99.89% by weight, for example 94.5 to 99.69% by weight

Pulp: 0.1 to 5% by weight, for example 0.3 to 2.5% by weight
Hydrocarbon group-containing polymer (oil-resistant agent): 0.00001 to 1% by weight, for example 0.0001 to 0.5% by weight
Amphoteric polyacrylamide polymer: 0.00001 to 1% by weight, for example 0.0001 to 0.5% by weight
Anionic polyacrylamide polymer: 0.00001 to 1% by weight, for example 0.0001 to 0.5% by weight
Cationic coagulant (solids): 0 to 1% by weight, for example 0.00005 to 0.5% by weight
Water-resistant agent (solids): 0 to 1% by weight, for example 0.00005 to 0.5% by weight
When each component is in the form of, for example, a dispersion, the above content indicates the solid content (based on all components) of each component in the formulated pulp slurry.

From another viewpoint, the content of each of the pulp and the oil-resistant agent based on the aqueous medium in the formulated pulp slurry can be suitably selected so as to attain a high freeness suitable for papermaking and dehydrating, and for example, can be as follows.

Pulp: 0.1 to 5.58% by weight, in particular 0.3 to 2.64% by weight
Oil-resistant agent (solids) : 0.001 to 2.79% by weight, in particular 0.005 to 1.05% by weight

The electrical conductivity of the formulated pulp slurry is preferably 0.1 to 2,000 μS/cm, 0.1 to 1000 μS/cm, 1 to 800 μS/cm, or 10 to 500 μS/cm. Within this range, the formulated pulp slurry may have water-resistant characteristics.
The pH of the formulated pulp slurry is preferably 4 to 9, more preferably 5 to 8, and even more preferably 6 to 7. Within this range, the formulated pulp slurry may have water-resistant characteristics.
The hardness of water used in the formulated pulp slurry is preferably 5,000 ppm or less, more preferably 3,000 ppm or less, particularly preferably 1,000 ppm or less, and especially preferably 500 ppm or less. Within this range, the formulated pulp slurry may have water-resistant characteristics.
Next, the formulated pulp slurry is made to form a molded pulp intermediate, the molded pulp intermediate is dehydrated and then at least dried to obtain a molded pulp product.
Papermaking, dehydrating, and drying can be performed according to conventionally known methods concerning molded pulp.
For example, by straining the formulated pulp slurry to dehydrate it (for example, by suction and/or pressure reduction) using a mold that has a desired shape and that is provided with numerous holes (and that may be equipped with a filter as necessary), the aqueous medium can be at least partially removed from the formulated pulp slurry, and a molded pulp intermediate having a shape that corresponds to the mold can be obtained.
Drying can be performed at a temperature at which the remaining aqueous medium can be effectively removed, for example, 90 to 250°C, in particular 100 to 200°C. The drying time is not limited, and can be selected such that the aqueous medium remaining in the molded pulp intermediate is substantially removed. The drying atmosphere is not limited, and may be conveniently an ambient atmosphere (air under normal pressure).
During and/or after drying, other steps that are conventionally known concerning molded pulp, for example, press molding (including heat pressing), may be performed if necessary.
Thus, a molded pulp product can be produced. This molded pulp product comprises a pulp, an oil-resistant agent, and can achieve high gas barrier properties and excellent water resistance and oil resistance.
The proportions of the pulp, the oil-resistant agent, or the like contained in the molded pulp product can be considered substantially the same as the solid contents of these components used as raw materials (usually, the aqueous medium and, if present, other liquid media can be removed by drying and press molding, but the solids can remain without being removed or decomposed).
In the molded pulp product, the content of each component (a component that can remain in the molded pulp product) based on the pulp (solids) can be suitably selected according to the physical properties desired of the molded pulp product, and, for example, can be as follows.

Hydrocarbon group-containing polymer: 0.01 to 10% by weight or 0.01 to 5% by weight, for example 0.05 to 2% by weight
Amphoteric polyacrylamide polymer: 0.01 to 10% by weight or 0.01 to 5% by weight, for example 0.05 to 2% by weight
Anionic polyacrylamide polymer: 0 to 5% by weight or 0.01 to 2% by weight, for example 0.05 to 1% by weight

The oil-resistant agent are internally added to the molded pulp product (they are added to a pulp slurry, and the molded pulp product is produced by a pulp molding method). Accordingly, after the molded pulp product is used, the entirety of the product can be crushed to bring it back to the original raw materials, and is thus suitable for recycle use. Furthermore, it is possible to utilize the intrinsic biodegradability of the pulp, the molded pulp product can extremely reduce and preferably can substantially eliminate the environmental burden. Also, with the molded pulp product, the texture of the

pulp can be maintained on the front side of the product, and the appearance is not impaired unlike when the front side is laminated with a plastic film and becomes glossy.

The molded pulp product can be suitably used as food containers (including trays and the like) for example, storage containers for frozen food and chilled food.

Since the molded pulp product of the present disclosure has excellent water resistance and oil resistance as necessary, moisture and oil derived from food do not impregnate the molded pulp product (a container), and it is thus possible to prevent deterioration of container strength resulting from impregnation with water and oil and prevent staining of the table surface or the like facing the bottom surface of the container with moisture and oil permeated through the container.

Embodiments have been described above, but it will be understood that various changes to form and detail can be made without departing from the spirit and scope of the claims.

Examples

Next, the present disclosure will now be described in detail by way of Examples, Comparative Examples, and Test Examples. However, the description of these does not limit the present disclosure.

Below, a part, %, and a ratio indicate a part by weight, % by weight, and a weight ratio, respectively, unless otherwise specified.

The test methods used below are as follows.

[High-temperature oil resistance]

First, 100 ml of an evaluation liquid (corn oil) at 65°C or 80°C was poured into a molded pulp product molded into a container shape, the molded pulp product was left to stand still for 30 minutes, then the evaluation liquid was discarded, and the extent of impregnation of the molded pulp product (the container) with the evaluation liquid was visually evaluated according to the following criteria.

4: Almost no oil stains on the inside of the bottom of the molded pulp container
3: No oil stains on the outside of the bottom of the molded pulp container
2: Oil stains recognized on less than 5% of the outside area of the bottom of the molded pulp container
1: Oil stains recognized on 5% or more and less than 50% of the outside area of the bottom of the molded pulp container
0: Oil stains recognized on 50% or more of the outside area of the bottom of the molded pulp container

[Moldability]

The molded pulp products were observed for the occurrence of poor dehydration and poor adhesion during molding.

Good: without poor dehydration and poor molding
Poor: with poor dehydration and/or poor molding

[Synthesis of hydrocarbon group-containing polymer 1]

A 1 L polyethylene container was charged with 90 parts of stearic acid amide-ethyl acrylate, 3 parts of dimethylaminoethyl methacrylate (DM), 7 parts of hydroxybutyl acrylate (HBA), 370 parts of pure water, 1.1 parts of acetic acid, and 10 parts of alkyl bis(2-hydroxyalkyl)methylammonium chloride, heated to 80°C, stirred with a homomixer for 1 minute at 2,000 rpm, and then emulsified and dispersed with ultrasonic waves for 15 minutes. The emulsified dispersion was transferred to a 1,000 cc four neck flask equipped with a nitrogen introducing tube, a thermometer, a stirring bar, and a reflux tube. After nitrogen purge, 1 part of 2,2'-azobis(2-methylpropionamidine) dihydrochloride was added and reacted at 60°C for 4 hours to obtain an aqueous dispersion liquid of the polymer. Thereafter, pure water was added to prepare a water dispersion having a solid content concentration of 25% by weight. The water dispersion had an ionic charge density of 250 μeq/g.

[Synthesis of hydrocarbon group-containing polymer 2]

A 1 L polyethylene container was charged with 90 parts of stearic acid amide-ethyl acrylate, 3 parts of dimethylaminoethyl methacrylate (DM), 7 parts of hydroxybutyl acrylate (HBA), 290 parts of pure water, 0.8 parts of

acetic acid, and 7 parts of alkyl dimethylbenzyl ammonium chloride, and 10 parts of polyoxyethylene alkyl ether, heated to 80°C, stirred with a homomixer for 1 minute at 2,000 rpm, and then emulsified and dispersed with ultrasonic waves for 15 minutes. The emulsified dispersion was transferred to a 1,000 cc four neck flask equipped with a nitrogen introducing tube, a thermometer, a stirring bar, and a reflux tube. After nitrogen purge, 1 part of 2,2'-azobis(2-methylpropionamidine) dihydrochloride was added and reacted at 60°C for 4 hours to obtain an aqueous dispersion liquid of the polymer. Thereafter, pure water was added to prepare a water dispersion having a solid content concentration of 25% by weight. The water dispersion had an ionic charge density of 220 μeq/g.

[Example 1]

To a freeness (Canadian Freeness) of 550 cc, 2,000 g of a 0.5% by weight of the water dispersion liquid of a mixture of 70 parts of beaten leaf bleached kraft pulp and 30 parts of needle bleached kraft pulp was added with contiguous stirring. Next, 0.3 g of a 5% solid aqueous solution of alkyl ketene dimer (AKD) (Hercon (R) 79, manufactured by Solenis) was added and kept stirring for 1 minute, and 1.5 g of the water dispersion of synthesized hydrocarbon group-containing polymer 1 diluted with water to a solid content of 10% was added. Then, 1.0 g of a composition containing amphoteric polyacrylamide 1 (product name: T-FC109, manufactured by SEIKO PMC CORPORATION) diluted with water to a solid content of 10% was added and kept stirring for 1 minute, and subsequently 0.5 g of a composition containing an anionic polyacrylamide system diluted with water to a solid content of 1% was added and kept stirring for 1 minute.

The above pulp slurry was placed in a metal tank. In the lower part of the tank, a metal pulp mold with many suction holes was present with a reticular body placed on top of the mold. From the side opposite to the side where the reticular body of the pulp mold was placed, the pulp-containing aqueous composition was suctioned and dehydrated through the pulp mold and the reticular body using a vacuum pump, and the solids (such as a pulp) contained in the pulp-containing aqueous composition were deposited on the reticular body to obtain a molded pulp intermediate. Next, the resulting molded pulp intermediate was dried by applying pressure from top and bottom with metal male and female molds heated to 60 to 200°C. As a result, a molded pulp product molded into a container shape was produced. Table 1 shows the results of evaluating the content of each component based on the pulp in the resulting molded pulp product, as well as high-temperature oil resistance and moldability.

[Example 2]

The experiment was performed in the same manner as in Example 1, except that 2.0 g of the water dispersion of synthesized hydrocarbon group-containing polymer 1 diluted with water to a solid content of 10% was added, and a composition containing anionic polyacrylamide (product name: C-10, manufactured by Harima Chemicals Group, Inc.) was not added. Table 1 shows the results of evaluating the content of each component based on the pulp in the resulting molded pulp product, as well as high-temperature oil-resistant characteristics and moldability.

[Example 3]

The experiment was performed in the same manner as in Example 2, except that 1.5 g of the water dispersion of synthesized hydrocarbon group-containing polymer 1 diluted with water to a solid content of 10% was added, 0.5 g of a composition containing amphoteric polyacrylamide 1 diluted with water to a solid content of 10%, and 1.5 g of a composition containing amphoteric polyacrylamide 2 (product name: Harmide KS38, manufactured by Harima Chemicals Group, Inc.) diluted with water to a solid content of 10% was added. Table 1 shows the results of evaluating the content of each component based on the pulp in the resulting molded pulp product, as well as high-temperature oil-resistant characteristics and moldability.

[Example 4]

The experiment was performed in the same manner as in Example 3, except that 1.5 g of the water dispersion of the hydrocarbon group-containing polymer 2 diluted with water to a solid content of 10% was added. Table 1 shows the results of evaluating the content of each component based on the pulp in the resulting molded pulp product, as well as high-temperature oil-resistant characteristics and moldability.

[Comparative Example 1]

The experiment was performed in the same manner as in Example 2, except that 1.0 g of a composition containing cationic polyacrylamide (product name: Polystron 705, manufactured by Arakawa Chemical Industries, Ltd.) diluted with water to a solid content of 10% was added, and a composition containing the amphoteric polyacrylamide 1 was

not added. Table 1 shows the results of evaluating the content of each component based on the pulp in the resulting molded pulp product, as well as high-temperature oil-resistant characteristics and moldability.

[Comparative Example 2]

The experiment was performed in the same manner as in Example 2, except that 1.0 g of a composition containing anionic polyacrylamide diluted with water to a solid content of 10% was added, and a composition containing the amphoteric polyacrylamide 1 was not added. Table 1 shows the results of evaluating the content of each component based on the pulp in the resulting molded pulp product, as well as high-temperature oil-resistant characteristics and moldability.

[Comparative Example 3]

The experiment was performed in the same manner as in Example 2, except that 5.0 g of a composition containing cationic starch (product name: SBGUM-POSIT 300, SANGUAN WONGSE IND. CO.,) diluted with water to a solid content of 10% was added, and a composition containing the amphoteric polyacrylamide 1 was not added. Table 1 shows the results of evaluating the content of each component based on the pulp in the resulting molded pulp product, as well as high-temperature oil-resistant characteristics and moldability.

[Comparative Example 4]

The experiment was performed in the same manner as in Comparative Example 3, except that 1.5 g of the synthesized water dispersion diluted with water to a solid content of 10% was added. Table 1 shows the results of evaluating the content of each component based on the pulp in the resulting molded pulp product, as well as high-temperature oil-resistant characteristics and moldability.

[Table 1]

| | | | | | | | | | Based on % by weight of pulp |
|---|---|---|---|---|---|---|---|---|---|
| | | Ex. 1 | Ex. 2 | Ex. 3 | Ex. 4 | Com. Ex.1 | Com. Ex. 2 | Com. Ex. 3 | Com. Ex. 4 |
| Hydrocarbon group-containing polymer 1 | Amount added [%] | 1.50 | 2.00 | 1.50 | | 2.00 | 2.00 | 2.00 | 1.50 |
| Hydrocarbon group-containing polymer 2 | Amount added [%] | | | | 1.50 | | | | |
| Amphoteric polyacrylamide 1 | Amount added [%] | 1.00 | 1.00 | 0.50 | 0.50 | | | | |
| Amphoteric polyacrylamide 2 | Amount added [%] | | | 1.50 | 1.50 | | | | |
| Cationic polyacrylamide | Amount added [%] | | | | | 1.00 | | | |
| Anionic polyacrylamide | Amount added [%] | 0.05 | | | | | 1.00 | | |
| Cationic starch | Amount added [%] | | | | | | | 5.00 | 5.00 |
| High-temperature oil resistance | 65°C | 3 | 4 | 3 | 3 | 2 | 1 | 3 | 2 |
| | 8 0°C | 3 | 4 | 3 | 3 | 2 | 0 | 3 | 1 |
| Moldability | | Good | Good | Good | Good | Good | Good | Poor | Poor |

Industrial Applicability

The oil-resistant agent of the present disclosure is applicable to a variety of paper, and in particular paper for use in a food container and a food packaging material. The oil-resistant agent is externally or internally, and in particular

internally incorporated into the paper.

List of embodiments

[Embodiment 1]

An oil-resistant agent composition comprising (1) a hydrocarbon group-containing polymer and (2) an amphoteric polyacrylamide polymer.

[Embodiment 2]

The oil-resistant agent composition according to Embodiment 1, wherein the hydrocarbon group-containing polymer is a polymer having:

(a) a repeating unit formed from an acrylic monomer having a long-chain hydrocarbon group having 7 to 40 carbon atoms, and
(b) a repeating unit formed from an acrylic monomer having a hydrophilic group.

[Embodiment 3]

The oil-resistant agent composition according to Embodiment 1 or 2, further comprising (3) an anionic polyacrylamide polymer.

[Embodiment 4]

The oil-resistant agent composition according to any one of Embodiments 1 to 3, which is added to a pulp (slurry) .

[Embodiment 5]

The oil-resistant agent composition according to Embodiment 4, wherein an amount of the hydrocarbon group-containing polymer is 0.03 to 3.0% by weight based on the pulp (solid weight), and an amount of the amphoteric polyacrylamide polymer is more than 0.3% by weight to 3.0% by weight based on the pulp (solid weight).

[Embodiment 6]

An oil-resistant agent kit comprising:

a liquid containing (1) a hydrocarbon group-containing polymer, and
a liquid containing (2) an amphoteric polyacrylamide polymer.

[Embodiment 7]

A method for producing oil-resistant paper, comprising adding (1) a hydrocarbon group-containing polymer and (2) an amphoteric polyacrylamide polymer to a paper constituent material or a pulp (slurry).

[Embodiment 8]

The method for producing oil-resistant paper according to Embodiment 7, further comprising adding (3) an anionic polyacrylamide polymer.

[Embodiment 9]

The method for producing oil-resistant paper according to Embodiment 7 or 8, wherein to the pulp (slurry),

(1) the hydrocarbon group-containing polymer and (2) the amphoteric polyacrylamide polymer are added in this order, or
(1) the hydrocarbon group-containing polymer, (2) the amphoteric polyacrylamide polymer, and (3) the anionic polyacrylamide polymer are added in this order.

[Embodiment 10]

The production method according to any one of Embodiments 7 to 9, wherein a pulp slurry has an electrical conductivity of 0.1 to 2,000 μS/cm and a pH of 4 to 9, and hardness of water used in the pulp slurry is 5,000 ppm or less.

[Embodiment 11]

Oil-resistant paper obtained by the production method according to any one of Embodiments 7 to 10.

[Embodiment 12]

Oil-resistant paper comprising (1) a hydrocarbon group-containing polymer and (2) an amphoteric polyacrylamide polymer inside the paper.

[Embodiment 13]

The oil-resistant paper according to Embodiment 12, comprising (1) the hydrocarbon group-containing polymer and (2) the amphoteric polyacrylamide polymer in the oil-resistant agent kit according to Embodiment 6 inside the paper.

[Embodiment 14]

The oil-resistant paper according to Embodiment 12 or 13, which is a molded pulp product.

[Embodiment 15]

The oil-resistant paper according to any one of Embodiments 12 to 14, which is a food packaging material or a food container.

## Claims

**1.** A composition, which is an oil-resistant agent composition comprising

- a hydrocarbon group-containing polymer (1) which is a non-fluorine polymer comprising a repeating unit formed from an acrylic monomer (a) having a long-chain $C_{7-40}$-hydrocarbon group, and
- an amphoteric polyacrylamide polymer (2).

**2.** The composition of claim 1, wherein the polymer (1) further comprises a repeating unit formed from an acrylic monomer (b) having a hydrophilic group.

**3.** The composition of claim 1 or 2, further comprising an anionic polyacrylamide polymer (3).

**4.** The composition of any of claims 1-3, which is added to a pulp or pulp slurry.

**5.** The composition of claim 4, wherein the amount of the hydrocarbon group-containing polymer is 0.03-3.0 wt.% based on the pulp (solid weight), and the amount of the amphoteric polyacrylamide polymer is > 0.3 to 3.0 wt.% based on the pulp (solid weight).

**6.** An oil-resistant agent kit comprising:

- a liquid containing a hydrocarbon group-containing polymer (1) as defined in claim 1, and
- a liquid containing an amphoteric polyacrylamide polymer (2) as defined in claim 1.

**7.** A method for producing oil-resistant paper, comprising adding a hydrocarbon group-containing polymer (1) as defined in claim 1 and an amphoteric polyacrylamide polymer (2) as defined in claim 1 to a paper constituent material or a pulp (slurry).

**8.** The method of claim 7, further comprising adding an anionic polyacrylamide polymer (3).

**9.** The method of claim 7 or 8, wherein to the pulp or pulp slurry, the polymer (1) and the polymer (2) are added in this order, or the polymer (1), the polymer(2), and the polymer (3) are added in this order.

**10.** The method of any of claims 7-9, wherein the pulp slurry has an electrical conductivity of 0.1-2,000 $\mu$S/cm and a pH of 4-9, and hardness of water used in the pulp slurry is $\leq$ 5,000 ppm.

**11.** Oil-resistant paper obtained by the method of any of claims 7-10.

**12.** Oil-resistant paper comprising, inside the paper, a hydrocarbon group-containing polymer (1) as defined in claim land an amphoteric polyacrylamide polymer (2) as defined in claim 1.

**13.** The oil-resistant paper of claim 12, comprising the polymer (1) and the polymer (2) in the oil-resistant agent kit of claim 6 inside the paper.

**14.** The oil-resistant paper of claim 12 or 13, which is a molded pulp product.

**15.** The use of the oil-resistant paper of any of claims 12-14 as a food packaging material or a food container.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009102771 A
- WO 2020054856 A
- WO 2020241709 A